# EUROPEAN PATENT APPLICATION

(11) **EP 4 715 624 A1**
(43) Date of publication of application: **25.03.2026**
(21) Application number: 25202080.5
(22) Date of filing: 15.09.2025
(51) Int. Cl.: G06F 16/2452, G06F 16/3329, G06F 16/334, G06F 16/9032

(54) **QUERY RESOLUTION**

(30) Priority: 20.09.2024 US 202418890803
(71) Applicant: Honeywell International Inc., Charlotte, NC 28202 (US)
(72) Inventor: SRIVASTAVA, Viraj, Charlotte, 28202 (US); SARKAR, Archisman, Charlotte, 28202 (US); MAJEWSKI, Joseph, Charlotte, 28202 (US); PANDURANGAN, Gobinath, Charlotte, 28202 (US); THAKUR, Kushagra, Charlotte, 28202 (US)
(74) Representative: Houghton, Mark Phillip

(57) **Abstract**

Approaches for efficiently and accurately resolving user queries related to a particular premises are described. According to one example, one or more data repositories, associated with the premises, that are to be searched to respond to a user query are identified using a query resolution model. Further, a processing route is determined to search and analyse the one or more data repositories. The user query and the one or more data repositories are then parsed, by the query resolution model, in accordance with the processing route to retrieve and process relevant data from each of the one or more data repositories for generating a final response to the user query. The relevant data may have a context similar to the context of the user query.

## Description

### BACKGROUND

Advancements in information technologies have enabled the development of intelligent interaction software and devices capable of generating responses to user queries based on available data. For example, various generative artificial intelligence (AI) chatbots can process natural language queries of a user and provide responses to the user, enabling the user to engage in human-like conversations. The interactive software, chatbots, and devices typically integrate a large language model (LLM) that parses a user query and the available data for generating the response. However, owing to the LLM's generic nature, constricted training capabilities, and limited processing capability, this direct integration may often be too generic, resulting in responses that, while meaningful and logically related to the user query, may be unreliable and lack context-specific relevance.

### BRIEF DESCRIPTION OF FIGURES

Systems and/or methods are now described, in accordance with examples of the present subject matter and with reference to the accompanying figures, in which:
Figure 1 illustrates a system for resolving a user query, according to an example;
Figure 2A and Figure 2B illustrate a computing environment implementing the system for resolving a user query, according to another example;
Figure 3 illustrates a simplified block diagram of a computing environment implementing the system for resolving a user query, according to another example;
Figures 4A to 4D illustrate data flow diagrams for resolving a user query, according to an example;
Figures 5A to 5F illustrate a method for resolving a user query, according to an example;
Figure 6 illustrate a method for resolving a user query, according to another example; and
Figure 7 illustrates a computing environment implementing a non-transitory computer-readable medium for resolving a user query, according to an example.

### DETAILED DESCRIPTION

Typically, premises, such as a building, a production plant, an industrial establishment, and an aircraft, include mechanical assets that may operate to perform a desired function related to the premises. For example, a power plant may include assets, such as turbines, compressors, generators, controllers, and sensors, that are involved in the process of generation of electricity. Similarly, a building may include a cooling system with assets, such as chiller, heat exchanger, and cooling tower that may operate to control temperature in certain parts of the building.

Extensive data related to the mechanical assets is typically collected through their operational, research, and strategic activities in structured or unstructured formats. The data is not only useful for research and daily activities related to the premises but also acts as a great source of data for generating insightful responses to user queries. For example, data related to an organization in the aviation industry, such as fuel consumption, maintenance schedules, routes of flights, and operational hours of flights, may help in resolving user queries related to the organization's predictive maintenance, route optimization, cost analysis, etc. However, when dealing with domain-specific queries related to a particular premises, LLM's fail to efficiently analyse the extensive data and fail to provide accurate and trustworthy responses owing to the LLM's generic nature. Thus, even though extensive data is available in relation to assets associated with the premises, users are unable to rely on conventional query resolution techniques integrating the LLM for asking domain-specific queries related to the premises.

Control and automation solutions currently offered in various industries do not facilitate human operators to communicate interactively using natural language. Existing control and automation solutions typically require operators to interact by way of traditional display-keyboard-mouse interfaces, with queries limited to a small, pre-programmed set. This is because systems employing the control and automation solutions are designed to control the assets associated with the premises, rather than being controlled based on information related to the assets. Further, the systems lack deep semantic knowledge of the premises. Consequently, the operators may not be able to efficiently troubleshoot issues within the premises and may not be able to analyse complex relationship between the assets by asking more complex and arbitrary questions. The inefficiency to troubleshoot and perform complex analysis using natural language queries may lead to increased time for gathering necessary information and reduced ability to detect early indications of abnormal situations within the premises. Additionally, the lack of comprehensive and contextualized enterprise-wide insights based on natural language queries impacts the quality, productivity, and throughput needed to achieve desired results in the premises. Thus, there is a need for query resolution techniques that efficiently process available data to provide accurate response to domain-specific queries.

The present subject matter describes approaches for efficiently and accurately resolving user queries, such as domain-specific user queries, related to a particular premises. Rather than analysing the user query and available data at one go, the present subject matter follows a sequential approach utilizing a query resolution model, such as a large language model (LLM), to perform analysis at various instances for generating preliminary response at each instance. The preliminary response may be refined at each instance to generate a final response to the user query. Initially, one or more data repositories, from a plurality of data repositories associated with the premises, are identified for being searched to respond to the user query. A processing route may then be determined to search and analyse the one or more data repositories. The user query and the one or more data repositories may then be parsed, by the query resolution model, in accordance with the processing route to retrieve and process relevant data from each of the one or more data repositories. After parsing each of the one or more data repositories, a preliminary response to the user query may be generated that may be further refined after parsing the subsequent data repository for generating the final response. Thus, instead of resolving the user query in one go, the described approaches break the user query into smaller solvable parts, where each part is solved by using a particular data repository. The described approach is an orchestration technique that tailors facts to guide and steer a query resolution model, such as a large language model (LLM), to provide an accurate response to the user queries related to a specific domain. The described approach enables intelligent, context-aware query resolution by dynamically selecting and searching appropriate data repositories related to assets associated with the premises.

In an example implementation of the present subject matter, the user query, received in relation to the premises, may be initially processed to obtain contextual data defining a context of the user query. The user query may be processed by the query resolution model to obtain the contextual data. The contextual data may be analyzed to ascertain one or more data categories, from a plurality of pre-defined data categories, relevant for responding to the user query. The one or more data repositories storing data of at least one of the one or more data categories are then identified, from the among the plurality of data repositories. In one example, the plurality of data repositories may store data, e.g., disparate data, related to assets associated with the premises. For example, one data repository may store time-series data obtained periodically or at different intervals in relation to the assets. Similarly, another data repository may store information available in user guides of each of the assets.

Once the one or more data repositories are identified, the processing route may be determined. In an example, for determining the processing route, a pre-defined chain-of-thought (COT) data for the premises may be obtained. The pre-defined COT data may include at least one reference query associated with the premises and a corresponding COT for processing each of the at least one reference query. For each reference query, the corresponding COT may define basis for selection of data repositories from the plurality of data repositories for processing of the reference query. Further, the corresponding COT may define basis for determining a reference order in which the data repositories are to be searched for generating a response for the reference query. The query resolution model may be prompted with the pre-defined COT data and the contextual data to obtain the processing route defining a sequential order for traversing the one or more data repositories.

In one example implementation of the present subject matter, for parsing the user query for each data repository of the one or more data repositories or the additional data repositories, it may be determined if the data repository is a first data repository in a sequential order of the one or more data repositories defined by the processing route. Upon determining that the data repository is the first data repository, the user query may be processed using the query resolution model to retrieve the relevant data from the data repository. Further, the preliminary response to the user query may be generated using the query resolution model based on the relevant data. Once the first data repository is parsed, it may be determined if there are additional data repositories in the sequential order that are to be searched for generating a final response to the user query. If there are no additional data repositories to be parsed, the final response may be generated.

However, upon determining that the data repository is not the first data repository or that there are additional data repositories in the sequential order, the preliminary response, generated using a preceding data repository in the sequential order, may be retrieved. The user query and the preliminary response may be processed using the query resolution model to retrieve the relevant data from the data repository. Then, a subsequent preliminary response to the user query may be generated using the query resolution model based on the relevant data and the preliminary response.

Once the one or more data repositories are parsed, it may be determined if additional data repositories are to be searched for generating a final response to the user query. The additional data repositories may then be parsed with the user query using the query resolution model. Otherwise, the final response may be generated using the subsequent preliminary response.

In an example, for parsing the user query and one of the one or more data repositories and the one or more additional data repositories, the contextual data may be analyzed using the query resolution model to generate a data extraction code for traversing at least one data repository of the one or more data repositories or the one or more additional data repositories. The data extraction code may be executed to retrieve the relevant data or the additional data from the at least one data repository.

In an example, for parsing the user query and one of the one or more data repositories and the one or more additional data repositories, a retrieval-augmented generation (RAG) model may be invoked to fetch particular data, required to respond to the user query, from at least one data repository of the one or more data repositories or the one or more additional repositories. The relevant data or the additional data may be generated by parsing the particular data using the query resolution model for natural language refinement.

In an example, for parsing the user query and the one or more data repositories, the one or more data repositories may be traversed sequentially. In another example, the one or more data repositories may be traversed simultaneously in parallel. In yet another example, a part of the one or more data repositories may be traversed sequentially and another part of the one or more data repositories may be traversed simultaneously.

The described approaches thus leverage the neural reasoning power of LLMs to generate accurate responses for domain-specific queries. The approach efficiently makes a decision on what data to retrieve, when to retrieve the data, and how to retrieve the data to process the retrieved data for generating the final response to the user query. The present subject matter is capable of quickly accessing and interpreting vast amounts of data from disparate sources and still provide a context-aware response to user queries. The present subject matter uses a query resolution model to intelligently search multiple data repositories associated with a premises, following a determined processing route, to resolve user queries.

The described approaches implement a targeted and sequential search strategy, reducing unnecessary data processing and improving response times. The search pattern is adapted based on the query's context and preliminary responses generated while processing the user query, ensuring comprehensive yet efficient data retrieval and response generation. As a result, the described approaches provide accurate, context-aware responses, ultimately leading to improved user experience and more effective management of premises-related information.

By providing accurate responses to the user queries, user's decision-making is enhanced, operational performance of the user is improved, and overall productivity of the user is enhanced. By enabling natural language interactions and providing contextualized insights for specific domains, the described approaches reduce downtime, minimize errors, and optimize processes across different facilities associated with the premises.

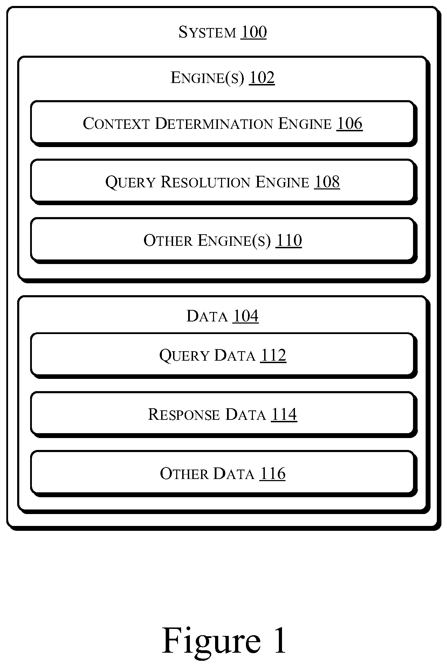

The present subject matter is further described with reference to Figure 1 to Figure 7. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

Figure 1 illustrates a system 100 for resolving a user query, according to an example. In one example, the system 100 may be a distributed computing system having one or more physical computing systems geographically distributed at same or different locations. In another example, one or more components of the system 100 may be hosted virtually, for example, on a cloud-based platform, while other components may be geographically distributed at same or different locations. In yet another example, the system 100 may be a stand-alone physical system geographically located at a particular location. In an example, the system 100 may be utilized by users associated with a premises for resolving queries related to the premises. The user query, for example, may be a natural language query that may be processed by the system 100 to provide an adequate response to the user.

In one example, the system 100 may include engine(s) 102 and data 104. The system 100 may also include additional components, such as display, input/output interfaces, operating systems, applications, and other software or hardware components (not shown in the figures).

The engine(s) 102 may be implemented as a combination of hardware and programming, for example, programmable instructions to implement a variety of functionalities of the engine(s) 102. In examples described herein, such combinations of hardware and programming may be implemented in several different ways. For example, the engine(s) 102 may be programmed using executable instructions. Such instructions may be stored on a non-transitory machine-readable storage medium which may be coupled either directly with the system 100 or indirectly (for example, through networked means). In an example, the engine(s) 102 may include a processing resource, for example, either a single processor or a combination of multiple processors, to execute such instructions. In the present examples, the non-transitory machine-readable storage medium may store instructions that, when executed by the processing resource, implement the engine(s) 102. In other examples, the engine(s) 102 may be implemented as electronic circuitry.

In one example, the engine(s) 102 may include a context determination engine 106, a query resolution engine 108, and other engine(s) 110. The other engine(s) 110 may further implement functionalities that supplement functions performed by the system 100 or any of the engine(s) 102.

The data 104 includes data that is either received, stored, or generated as a result of functions implemented by any of the engine(s) 102 or the system 100. It may be further noted that information stored and available in the data 104 may be utilized by the engine(s) 102 for performing various functions of the system 100. The data 104 may include query data 112, response data 114, and other data 116. The query data 112 may include data associated with queries raised by users for processing by the system 100. The response data 114 may include data associated with responses generated by the system 100 in relation to user queries. The other data 116 may include data that is either received, stored, or generated as a result of functions implemented by any of the engine(s) 102.

In operation, the context determination engine 106 may process a user query, received in relation to a premises, to obtain contextual data. The contextual data may define a context of the user query. Examples of the premises may include, but are not limited to, a building, a production plant, an industrial establishment, an aircraft, an area belonging to the building, any covered or uncovered area including mechanical assets, and a perimeter of interest around the building or the covered or uncovered area. The building may be a commercial or a residential establishment, for example, a residential apartment, a hotel, an inn, a motel, a resort, an educational institute, a commercial complex, an industrial establishment, a data center, a storage facility, and a hospital. Further, a building may also refer to a combination of two or more structures or compounds. The mechanical assets may be assets operating to perform a desired function related to the premises. Examples of the mechanical assets for a power plant may include, but are not limited to, turbines, compressors, generators, controllers, and sensors. In one example, the user query and the contextual data may be stored within the query data 112.

Once the contextual data is obtained, the query resolution engine 108 may identify one or more data repositories from a plurality of data repositories associated with the premises, using the contextual data and a query resolution model. In an example, the query resolution model may be a language model, such as a large language model (LLM), having capabilities to parse a natural language query and generate a response to the natural language query to establish a human-like conversation. In an example, the plurality of data repositories may store data related to assets, say the mechanical assets, associated with the premises. In an example, the plurality of data repositories may store disparate data related to the assets. For example, one data repository may store time-series data obtained periodically or at different intervals in relation to the assets. Similarly, another data repository may store information available in user guides of each of the assets.

In an example, the query resolution engine 108 may parse the user query and the one or more data repositories, to retrieve and process relevant data from each of the one or more data repositories for generating a preliminary response to the user query. The relevant data may have a context similar to the context of the user query. For example, consider that a user raises a query "what was affected due to fault in asset A?". Then, the one or more data repositories to be searched and analyzed for responding to the query may include a specific data repository that stores connection diagrams illustrating connections between assets associated with the premises for which the query has been raised. Upon parsing the user query and the specific data repository, relevant data, i.e., identifiers of assets connected in upstream and downstream of asset A may be retrieved from the specific data repository. Thus, by parsing the specific data repository, the assets associated with the premises that are likely to be affected by the fault in asset A may be ascertained. In the afore-mentioned example of the query, the preliminary response may be "asset B, asset C, and asset D may have been possibly affected by the fault in asset A". In an example, the user query and the one or more data repositories may be parsed using the query resolution model.

Subsequently, the query resolution engine 108 may analyze the preliminary response to determine if any additional data repositories from the plurality of data repositories are to be searched for refining the preliminary response. In an example, the preliminary response may be analyzed using the contextual data and the query resolution model. If it is determined that additional data repositories are not to be searched, then a final response to the user query may be generated based on the preliminary response.

Upon determining that one or more additional data repositories from the plurality of data repositories are to be searched, the query resolution engine 108 may parse the user query and the one or more additional data repositories to retrieve additional data having a context similar to the context of the user query. For instance, in the afore-mentioned example of the query, based on the contextual data, it may be determined that a data repository storing configuration data related to the assets and another data repository storing telemetry data related to the assets should be searched for refining the preliminary response. The configuration data may include thresholds for parameters, such as temperature and pressure, associated with the assets. The telemetry data may include time-specific values of the parameters, such as temperature and pressure, associated with the assets. In an example, firstly the data repository with the configuration data may be parsed with the user query to retrieve additional data, i.e., the thresholds for the parameters with respect to assets B, C, and D. Thereafter, the data repository with the telemetry data may be parsed with the user query to retrieve additional data, i.e., time-specific values of the parameters associated with assets B, C, and D, after the fault in started asset A. In an example, the user query and the one or more additional data repositories may be parsed by the query resolution model.

Subsequently, the query resolution engine 108 may process the preliminary response and the additional data to generate a final response to the user query. For instance, in the afore-mentioned example, the preliminary response and the additional data may be processed to determine if any threshold was breached with respect to the parameters associated with assets B, C, and D, after the fault was initiated in asset A. Considering that thresholds were breached for assets B and D after the fault in asset A was initiated, a final response may be generated as "asset B and asset D were affected due to the fault in asset A". In an example, the preliminary response and the additional data may be processed by the query resolution model. The afore-mentioned example of the query and the final response is not intended to be construed as a limitation, and various queries may be raised and various responses may be generated for the queries that, although not explicitly described herein, encompass the principles of the present subject matter. The described approach enables intelligent, context-aware query resolution by dynamically selecting and searching appropriate data repositories related to assets associated with the premises.

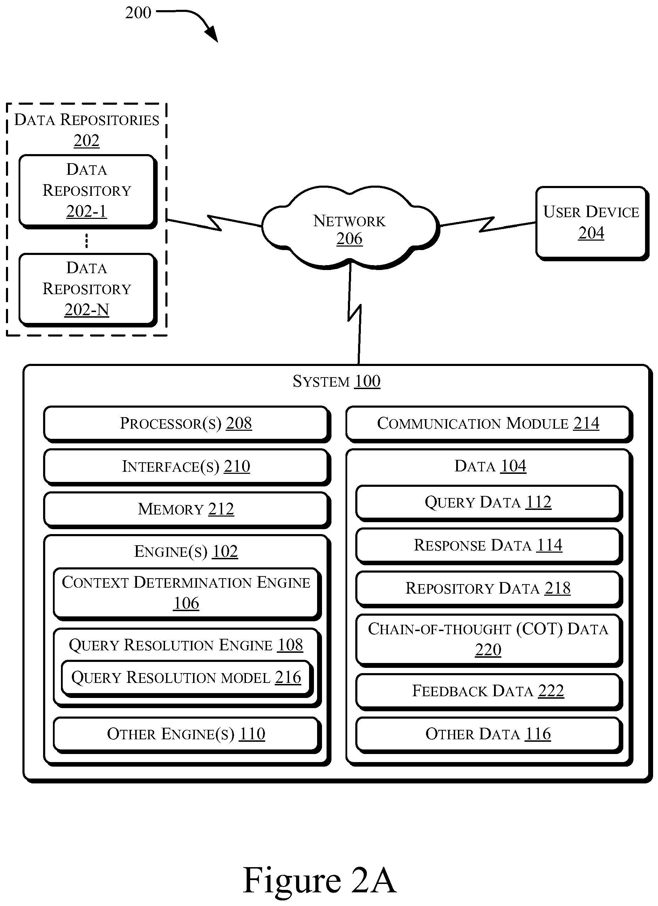

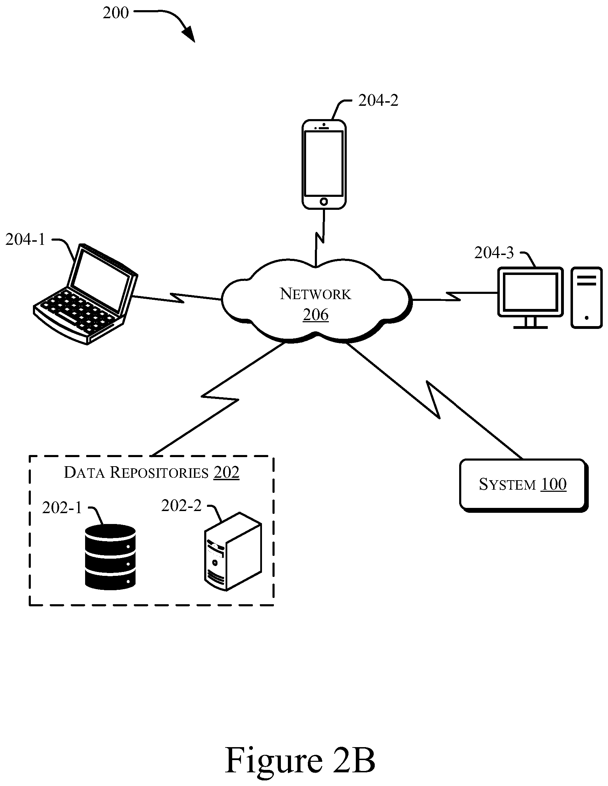

Figure 2A and Figure 2B illustrate a computing environment 200 implementing the system 100 for resolving a user query, according to another example. In one example, the computing environment 200 may include the system 100, data repositories 202-1,..., 202-N associated with the premises, where N may be a natural number, and a user device 204. The data repositories 202-1,..., 202-N may be individually referred to as data repository 202 and collectively referred to as the data repositories 202. In an example, each of the data repositories 202 may store data of a particular data category from a plurality of pre-defined data categories. In an example, the data repository 202 may be a device storing data of the particular data category. In another example, the data repository 202 may be a portion of a device storing data of the particular data category. Examples of the plurality of pre-defined data categories may include, but are not limited to, telemetry data, logbook data, asset and tag configuration data, asset and tag hierarchy data, asset manuals data, and standard maintenance data. The telemetry data may include time-series measurements, events, alarms, operator actions, etc., related to the assets within the premises. The logbook data may include shift summary of operators controlling or monitoring the assets, operator logbook including record of the operating conditions, observations and actions taken over time by the operators, and maintenance logbook defining historical maintenance records related to the assets. The asset and tag configuration data may include certain standard specifications related to the asset such as high or low limits of various tags, such as temperature and pressure, associated with the asset. The asset and tag hierarchy data may include information derived from process flow diagrams (PFDs), piping and instrumentation diagrams (P&IDs), etc., defining connections between the assets. The asset manuals data may include information described in user guides associated with each of the assets. The standard maintenance data may include standard maintenance records for the assets. In an example, the data repository 202 may store data in a text format, where the data in the text format may be obtained from documents, such as the PFDs and the P&IDs, available in an image format with respect to the premises. In another example, the data repository 202 may store data, such as the PFDs and the P&IDs, in an image format and the data may be converted from the image format to the text document during retrieval of the data from the data repository 202 for processing the user query.

The data repository 202 may be a processing equipment, a database, a server, an electronic device, a system, or any machine having capabilities to store data, associated with the premises, of the plurality of pre-defined data categories in structured or unstructured formats. As exemplarily illustrated in Figure 2B, examples of the data repository 202 may include, but are not limited to, a database 202-1 and a server 202-2. In an example, the database 202-1 or the server 202-2, as a whole, may be referred to as the data repository 202. In another example, a portion of the database 202-1 or the server 202-2 may be referred to as the data repository 202. Thus, the database 202-1 may include a single data repository 202 or multiple data repositories 202. Similarly, the server 202-2 may include a single data repository 202 or multiple data repositories 202.

In an example, the user device 204 may be a device utilized by a user to raise a user query to the system 100. Further, the system 100 may provide various notifications and the response to the user query over the user device 204. As exemplarily illustrated in Figure 2B, examples of the user device 204 may include, but are not limited to, a laptop 204-1, a mobile phone 204-2, and a computer 204-3. Examples of the user device 204 may also include, but are not limited to, a desktop, a tablet computer, a personal digital assistant (PDA) and any electronic device capable of transmitting or receiving data. Although one user device 204 has been illustrated in Figure 2A and three user devices 204-1, 204-2, and 204-3 have been illustrated in Figure 2B for the sake of brevity, it should be understood to a person skilled in the art that any number of user devices 204 may be connected with the system 100 to raise queries and receive response for the raised queries.

The system 100, the data repositories 202, and the user device 204 may be communicably coupled with each other over a communication network 206 and may exchange data and signals over the communication network 206. The communication network 206 may be a wireless network, a wired network, or a combination thereof. The communication network 206 may also be an individual network or a collection of many such individual networks, interconnected with each other and functioning as a single large network, e.g., the Internet or an intranet. Examples of such individual networks include local area network (LAN), wide area network (WAN), the internet, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN).

Depending on the technology, the communication network 206 may include various network entities, such as transceivers, gateways, and routers. In an example, the communication network 206 may include any communication network that uses any of the commonly used protocols, for example, Hypertext Transfer Protocol (HTTP), and Transmission Control Protocol/Internet Protocol (TCP/IP).

In one example, the system 100 may include processor(s) 208, interface(s) 210, memory 212, a communication module 214, the engine(s) 102, and the data 104. The system 100 may also include other components, such as display, input/output interfaces, operating systems, applications, and other software or hardware components (not shown in the figures).

The processor(s) 208 may be implemented as microprocessors, microcomputers, microcontrollers, digital signal processors, central processing units, state machines, logic circuitries, and/or other devices that manipulate signals based on operational instructions. The interface(s) 210 may allow the connection or coupling of the system 100 with one or more other devices, such as the data repositories 202 and the user device 204, through a wired (e.g., Local Area Network, i.e., LAN) connection or through a wireless connection (e.g., Bluetooth^{®}, Wi-Fi). The interface(s) 210 may also enable intercommunication between different logical as well as hardware components of the system 100.

The memory 212 may be a computer-readable medium, examples of which include volatile memory (e.g., RAM), and/or non-volatile memory (e.g., Erasable Programmable read-only memory, i.e., EPROM, flash memory, etc.). The memory 212 may be an external memory or an internal memory, such as a flash drive, a compact disk drive, an external hard disk drive, or the like. The memory 212 may further include the data 104 and/or other data which may either be received, utilized, or generated during the operation of the system 100.

The communication module 214 may be a wireless communication module. Examples of the communication module 214 may include, but are not limited to, Global System for Mobile communication (GSM) modules, Code-division multiple access (CDMA) modules, Bluetooth modules, network interface cards (NIC), Wi-Fi modules, dial-up modules, Integrated Services Digital Network (ISDN) modules, Digital Subscriber Line (DSL) modules, and cable modules. In one example, the communication module 214 may also include one or more antennas to enable wireless transmission and reception of data and signals. The communication module 214 may allow the system 100 to transmit data and signals to one or more other devices, such as the data repositories 202 and the user device 204; and receive data and signals from the one or more other devices.

The engine(s) 102 may include the context determination engine 106, the query resolution engine 108, and the other engine(s) 110, as explained with reference to Figure 1. In an example, the query resolution engine 108 may implement a query resolution model 216 for resolving user queries. In an example, the query resolution model 216 may be a language model, such as a large language model (LLM), having capabilities to parse a natural language query and generate a response to the natural language query to establish a human-like conversation.

The data 104 may include the query data 112, the response data 114, and the other data 116, as explained with reference to Figure 1. In an example, the data 104 may further include repository data 218, chain-of-thought (COT) data 220, and feedback data 222. In an example, the repository data 218 may include details about the data repositories 202. The details about the data repositories 202 may include identifiers of a plurality of data repositories 202 associated with the premises. Further, the details about the data repositories 202 may include tags defining the plurality of pre-defined data categories that are related to the plurality of data repositories 202. In an example, the chain-of-thought (COT) data 220 may be created by a user, such as a subject matter expert (SME), based on domain knowledge and rules associated with the premises. The chain-of-thought (COT) data 220 may be utilized for implementing COT prompting techniques during processing of the user query by the system 100. The feedback data 222 may indicate feedback, received from users, on responses generated by the system 100 to the user queries.

In operation, a user intending to obtain information regarding a premises may raise a user query in relation to the premises using the user device 204, as previously described with reference to Figure 1. Upon receiving the user query, the context determination engine 106 may process the user query. In one example, if the user query has been raised in the form of a voice command, the user query may be initially converted to a text by utilising a speech to text converter. The context determination engine 106 may process the user query to obtain contextual data associated with the user query. The contextual data may define a context of the user query. In one example, the contextual data associated with the user query may be obtained by the context determination engine 106 by implementing Natural Language Understanding (NLU) to identify key elements, such as words; entities like name of assets and locations; and the overall intent associated with the user query. In one example, the contextual data associated with the user query may be obtained by the context determination engine 106 by implementing Named Entity Recognition (NER) for identifying various entities associated with the user query. In one example, the contextual data associated with the user query may be obtained by the context determination engine 106 by implementing any context determination technique suitable for processing user queries related to the premises. In one example, the contextual data associated with the user query may be obtained by the context determination engine 106 by implementing one or more user defined software or algorithms which may be customizable as per user requirement. In one example, the user query and the contextual data may be stored within the query data 112.

Subsequently, the query resolution engine 108 may use the contextual data and the query resolution model 216 to identify one or more data repositories from a plurality of data repositories 202 associated with the premises. The plurality of data repositories 202 may store data related to assets associated with the premises. In an example, the one or more data repositories are to be searched to respond to the user query. In an example, the query resolution engine 108 may utilize COT prompting techniques to prompt the query resolution model 216 for identifying the one or more data repositories.

In an example, for identifying the one or more data repositories, the query resolution engine 108 may analyze the contextual data to ascertain one or more data categories, from the plurality of pre-defined data categories, relevant for responding to the user query. The contextual data, for instance, may include at least one of meaning of words used within the user query, frequency of a word used within the user query, grouping of words within the user query belonging to a particular class or group, tone in which the user query is being asked by the user, specific keywords or IDs provided by the user in the user query, and one or more user suggested categories of data that may be relevant for responding to the user query. Thus, for an example user query "when did fault occur in asset A and what was affected due to the fault in asset A?", it may be ascertained that two specific data categories, i.e., the telemetry data and the asset and tag hierarchy data are relevant for responding to the user query. Although specifically two data categories are mentioned as relevant for the exemplary user query, it should be understood that any number of data categories may be ascertained as relevant based on the context of the user query.

Subsequently, for each of the plurality of data repositories, the query resolution engine 108 may determine whether the data repository stores data of at least one of the one or more data categories to identify the one or more data repositories. In an example, each of the one or more data repositories may store data of at least one of the one or more data categories. Thus, for the example user query, the one or more data repositories may include a data repository 202-1 storing the telemetry data and a data repository 202-4 storing the asset and tag hierarchy data.

Once the one or more data repositories are identified, the query resolution engine 108 may parse the user query and the one or more data repositories, to retrieve and process relevant data from each of the one or more data repositories for generating a preliminary response to the user query. The relevant data may have a context similar to the context of the user query. For instance, for the example user query, relevant data, i.e., a particular time associated with a fault alarm raised for asset A may be retrieved from the data repository 202-1. Further, relevant data, i.e., identifiers of assets connected in upstream and downstream of asset A may be retrieved from the data repository 202-4. Thus, by parsing the data repositories 202-1 and 202-4, the particular time at while the fault occurred in asset A may be determined and it may be determined that which of the assets associated with the premises may be affected by the fault in asset A. In the afore-mentioned example of the query, the preliminary response may be "the fault occurred in asset A at the particular time. Further, asset B, asset C, and asset D may have been possibly affected by the fault in asset A". In an example, the query resolution engine 108 may parse the user query and the one or more data repositories by the query resolution model 216. In an example, the query resolution engine 108 may parse the user query and the one or more data repositories in accordance with a processing route. The processing route may define a sequential order in which the one or more data repositories are to be searched and analysed to respond to the user query.

In an example, the query resolution engine 108 may determine the processing route using the contextual data and the query resolution model 216. The query resolution engine 108 may utilize COT prompting technique for determining the processing route. In an example, for determining the processing route, the query resolution engine 108 may obtain a pre-defined chain-of-thought (COT) data for the premises. The pre-defined COT data may be created by a user, such as a subject matter expert (SME), based on domain knowledge and rules associated with the premises. The pre-defined COT data may include at least one reference query associated with the premises and a corresponding COT for processing each of the at least one reference query. For each reference query, the corresponding COT may define basis for selection of data repositories from the plurality of data repositories for processing of the reference query. Further, the corresponding COT may define a basis for determining a reference order in which the data repositories are to be searched for generating a response for the reference query. In one example, the pre-defined COT data may be stored as the COT data 220.

Subsequently, the query resolution engine 108 may prompt the query resolution model 216 with the pre-defined COT data and the contextual data to obtain the processing route defining the sequential order for traversing the one or more data repositories. In an example, for parsing the user query and the one or more data repositories in accordance with the processing route, the query resolution engine 108 may traverse the one or more data repositories sequentially. In another example, the query resolution engine 108 may traverse the one or more data repositories simultaneously in parallel. In yet another example, the query resolution engine 108 may traverse a part of the one or more data repositories sequentially and may traverse another part of the one or more data repositories simultaneously. For instance, for the example user query, the data repositories 202-1 and 202-4 may be traversed simultaneously in parallel as outputs of the data repositories 202-1 and 202-4 are independent of each other.

Once the user query and the one or more data repositories are parsed, the query resolution engine 108 may analyze the preliminary response to determine if any additional data repositories from the plurality of data repositories are to be searched for refining the preliminary response. In an example, the preliminary response may be analyzed using the contextual data and the query resolution model 216. If it is determined that any additional data repositories are not to be searched, then a final response to the user query may be generated based on the preliminary response. In an example, determination regarding the one or more additional data repositories may be made by the query resolution engine 108 using the COT prompting techniques on the query resolution model 216.

Upon determining that one or more additional data repositories from the plurality of data repositories are to be searched, the query resolution engine 108 may parse the user query and the one or more additional data repositories to retrieve additional data having a context similar to the context of the user query. For instance, for the example user query, based on the contextual data, it may be determined that a data repository 202-3 storing the asset and tag configuration data and the data repository 202-1 storing the telemetry data should be searched for refining the preliminary response. In an example, similar to the one or more data repositories, the one or more additional data repositories may be parsed according to a processing route that may be determined by the query resolution engine 108 using the COT prompting techniques on the query resolution model 216. For the example user query, the data repository 202-3 may be parsed first with the user query to retrieve additional data, i.e., the high or low limits for the tags with respect to assets B, C, and D. The preliminary response may be refined based on the additional data retrieved from the data repository 202-3.

Thereafter, the data repository 202-1 may be parsed with the user query to retrieve additional data, i.e., time-specific values of the tags associated with assets B, C, and D, after the fault was initiated in asset A. In an example, the user query and the one or more additional data repositories may be parsed by the query resolution model 216. In an example, the relevant data and the additional data may be stored within the repository data 218.

Subsequently, the query resolution engine 108 may process the preliminary response and the additional data to generate a final response to the user query. For instance, for the example user query, the preliminary response and the additional data may be processed to determine if any limits were breached with respect to the tags associated with assets B, C, and D, after the fault was initiated in asset A. Considering that high or low limits were breached for assets B and D after the fault in asset A was initiated, a final response may be generated as "the fault occurred in asset A at the particular time. The high limit of tag P for asset B is X which was breached after the fault stated in asset A. The low limit of tag Q for asset D is Y which was breached after the fault stated in asset A. Thus, asset B and asset D were affected due to the fault in asset A". In an example, the preliminary response and the additional data may be processed by the query resolution model 216. The afore-mentioned example of the user query, the preliminary response, and the final response is not intended to be construed as a limitation, and various queries may be raised and various responses may be generated for the queries that, although not explicitly described herein, encompass the principles of the present subject matter.

In an example, for parsing the user query for each data repository of the one or more data repositories or the one or more additional data repositories, the query resolution engine 108 may determine if the data repository is a first data repository in the sequential order of the one or more data repositories.

Upon determining that the data repository is the first data repository, the query resolution engine 108 may process the user query using the query resolution model 216 to retrieve the relevant data from the data repository. Further, the query resolution engine 108 may generate the preliminary response to the user query using the query resolution model 216 based on the relevant data. The preliminary response may be utilized for generating the final response.

Upon determining that the data repository is not the first data repository, the query resolution engine 108 may retrieve the preliminary response generated using a preceding data repository in the sequential order. The query resolution engine 108 may process the user query and the preliminary response using the query resolution model 216 to retrieve the relevant data from the data repository. Then, the query resolution engine 108 may generate a subsequent preliminary response to the user query using the query resolution model 216 based on the relevant data and the preliminary response. The subsequent preliminary response may be utilized for generating the final response. Thus, after parsing each data repository, the preliminary response generated using the preceding data repository is continuously refined until all relevant data repositories are parsed to finally generate the final response. In an example, the preliminary response, the subsequent preliminary response, and the final response may be stored within the response data 114.

In an example, for parsing the user query and one of the one or more data repositories and the one or more additional data repositories, the query resolution engine 108 may analyze the contextual data using the query resolution model 216 to generate a data extraction code for traversing at least one data repository of the one or more data repositories or the one or more additional data repositories. In an example, the data extraction code may be a code written in a programming language, such as python. The query resolution engine 108 may execute the data extraction code to retrieve the relevant data or the additional data from the at least one data repository. In an example, the data extraction code may call application programming interfaces (APIs) to retrieve the relevant data or the additional data from the at least one data repository. In an example, the data extraction code may be generated for traversing the at least one data repository that requires calling of the APIs for data retrieval according to the data category. For example, for traversing a data repository storing the telemetry data and a data repository storing the asset and tag configuration data, the data extraction code may be utilized. Thus, depending on the data category associated with the data repository, a data retrieval technique including the generation and execution of the data extraction code may be utilized.

In an example, for parsing the user query and one of the one or more data repositories and the one or more additional data repositories, the query resolution engine 108 may invoke a retrieval-augmented generation (RAG) model to fetch particular data, required to respond to the user query, from at least one data repository of the one or more data repositories or the one or more additional repositories. The query resolution engine 108 may generate the relevant data or the additional data by parsing the particular data using the query resolution model 216 for natural language refinement. In an example, the RAG model may be invoked to fetch data from the at least one data repository that has information from static data sources such as user guides or dynamic data sources such as logbooks that are continuously updated. Thus, depending on the data category associated with the data repository, a data retrieval technique including invoking of a RAG model may be utilized.

In an example, the final response generated by the query resolution engine 108 of the system 100 may be transmitted to the user device 204 for presenting the final response to the user query to the user. The user may utilize the user device 204 to provide feedback related to the final response. The feedback may be directed to accuracy of the final response. In addition, or alternatively, the feedback may be directed to completeness of the final response. The system 100 may receive the feedback from the user device 204. The feedback may be stored as the feedback data 222. The feedback data 222 may be utilized by the system to fine-tune the query resolution model 216. The described approach enables intelligent, context-aware query resolution by dynamically selecting and searching appropriate data repositories related to assets associated with the premises.

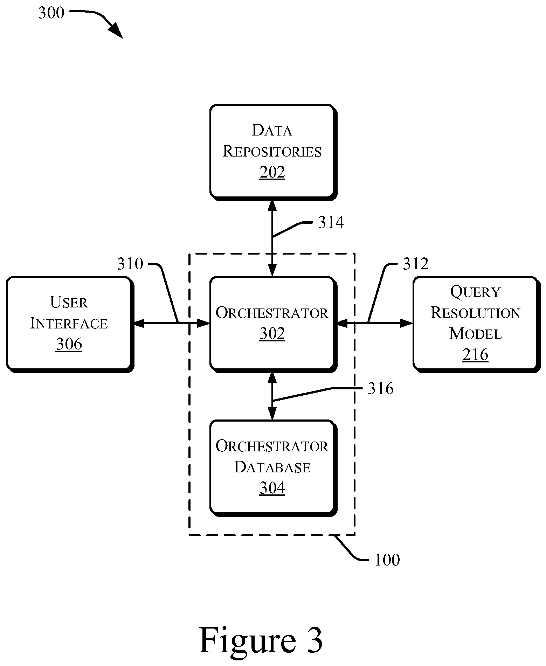

Figure 3 illustrates a simplified block diagram of a computing environment 300 implementing the system for resolving a user query, according to another example. In an example, the computing environment 300 may include the data repositories 202 and the query resolution model 216. The computing environment 300 may further include an orchestrator 302, an orchestrator database 304, and a user interface 306. In an example, the orchestrator 302 and the orchestrator database 304 may together implement functionalities that supplement functions performed by the system 100. The orchestrator 302 may implement functionalities that supplement functions performed by any of the engine(s) 102. The orchestrator 302 may coordinate and manage communication between the data repositories 202, the query resolution model 216, and the user interface 306. Further, the orchestrator database 304 may store data, say the data 104, that is either received, stored, or generated as a result of functions implemented by the orchestrator 302. The user interface 306 may be an interface that may be utilized by a user for raising queries related to a premises and for receiving response to the queries. Examples of the premises may be the same as explained with reference to Figure 1.

The block diagram of the computing environment 300 further illustrates communication links 310, 312, 314, and 316 establishing communication between various components of the computing environment 300. The communication links 310, 312, 314, and 316 may be a wireless link, a wired link, or a combination thereof. In an example, one or more of the communication links 310, 312, 314, and 316 may be established over the network 206 as described in Figure 2A and Figure 2B.

In an example, a first communication link 310 may be used by the orchestrator 302 and the user interface 306 to communicate with each other for transmitting or receiving data or signals. For example, the first communication link 310 may be used for transmission or reception of a user query and a final response to the user query, explained with reference to Figure 2A and Figure 2B. When a user utilizes the user interface 306 for raising a user query, the user query may be transmitted to the orchestrator 302 for processing through the first communication link 310. Further, once the user query is processed and a final response to the user query is generated by the orchestrator 302, the final response may be transmitted by the orchestrator 302 to the user interface 306 for presenting the final response to the user.

In an example, a second communication link 312 may be used by the orchestrator 302 and the query resolution model 216 to communicate with each other for transmitting or receiving data or signals. For example, the second communication link 312 may be used for transmission or reception of the user query, the contextual data, the pre-defined COT data, the repository data, and the response data, as previously explained in description of Figure 2A and Figure 2B. The orchestrator 302 may utilize the second communication link 312 to transmit required data for processing by the query resolution model 216. Further, the orchestrator 302 may utilize the second communication link 312 to receive data generated by query resolution model 216 upon processing the required data. In other words, the orchestrator 302 may utilize the second communication link 312 to fine-tune the query resolution model 216 for soliciting the query resolution model 216 to generate a desired response.

In an example, a third communication link 314 may be used by the orchestrator 302 and the data repositories 202 to communicate with each other for transmitting or receiving data or signals. For example, the third communication link 314 may be used for transmission or reception of the relevant data or the additional data, explained with reference to Figure 2A and Figure 2B. The orchestrator 302 may utilize the second communication link 312 to transmit data requests to the data repositories and receive the relevant data or the additional data from the data repositories.

In an example, a fourth communication link 316 may be used by the orchestrator 302 and the orchestrator database 304 to communicate with each other for transmitting or receiving data or signals. For example, the fourth communication link 316 may be used for transmission or reception of the query data 112, the response data 114, the repository data 218, the COT data 220, the feedback data 222, and the other data 116, as previously explained in description of Figure 2A and Figure 2B. The orchestrator 302 may utilize the fourth communication link 316 to store data into and retrieve data from the orchestration database 304 for processing of the user query.

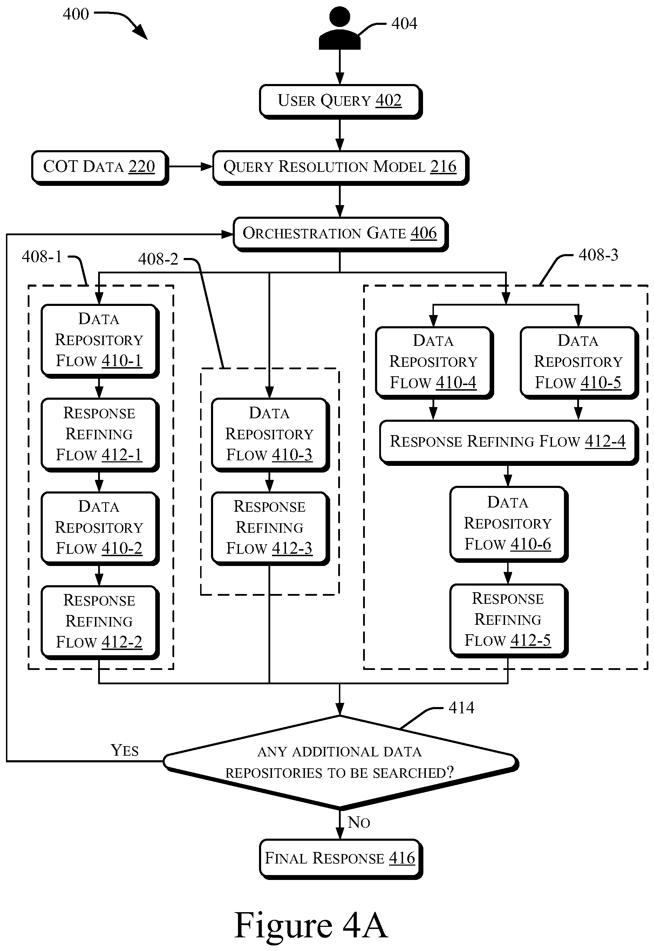

Figures 4A to 4D illustrate data flow diagrams 400, 410, and 412 for resolving a user query 402, according to an example. The order in which the data flow diagrams 400, 410, and 412 are described is not intended to be construed as a limitation, and some of the described components of the data flow diagrams 400, 410, and 412 may be combined in a different order to implement a data flow according to the data flow diagrams 400, 410, and 412, or an alternative data flow.

Figure 4A illustrates the data flow diagram 400 for resolving a user query 402, according to an example. According to the data flow diagram 400, the user query 402 may be received from a user 404 through a user device, say the user device 204. The user query 402 and the COT data 220 may be provided to the query resolution model 216. The query resolution model 216 may then obtain the contextual data, identify the one or more data repositories for searching and analyzing, and determine the processing route to traverse the one or more data repositories, as explained with reference to Figure 2A and Figure 2B.

In an example, the query resolution model 216 may provide the processing route to an orchestration gate 406. The orchestration gate 406 may be configured to enable traversal of the one or more data repositories. In an example, the orchestration gate 406 may be controlled by the orchestrator 302. The orchestration gate 406 may direct data between different components for enabling processing according to the processing route.

As exemplarily illustrated in Figure 4A, the orchestration gate 406 may process the user query in accordance with one of the exemplary data flows 408-1, 408-2, and 408-3. The data flows 408-1, 408-2, and 408-3 may be collectively referred to as the data flows 408 and individually referred to as data flow 408. Although only three example data flows 408-1, 408-2, and 408-3 have been described and illustrated, it should be understood to a person skilled in the art that any number of variations of data flows may be possible according to the number of data repositories. In an example, each data flow 408 may include at least one data repository flow 410 and at least one response refining flow 412. Each of the at least one data repository flow 410 may be a data flow for traversing and retrieving relevant data from a particular data repository 202. In an example, the data repository flow 410 and the response refining flow 412 may be provided in a sequential order such that each data repository flow 410 is followed by a corresponding response refining flow 412. The response refining flow 412 may be a data flow for generating a preliminary response based on the relevant data obtained using the corresponding data repository flow 410.

In one example, the data flow 408-1 may include a data repository flow 410-1 corresponding to a first data repository, a response refining flow 412-1, a data repository flow 410-2 corresponding to a second data repository, and a response refining flow 412-2. The data repository flow 410-1 may define the data flow for traversing and retrieving the relevant data from the first data repository, say, a first data repository 202-1. The data repository flow 410-2 may define the data flow for traversing and retrieving the relevant data from the second data repository, say, a second data repository 202-2. Thus, the data flow 408-1 includes traversal of two data repositories 202-1 and 202-2. Further, the data repositories 202-1 and 202-2 may be traversed sequentially one after another according to the data flow 408-1. According to the data flow 408-1, initially, the first data repository 202-1 may be parsed along with the user query to obtain the relevant data using the data repository flow 410-1. The response refining flow 412-1 may then be implemented to generate a preliminary response based on the relevant data obtained from the first data repository 202-1. Thereafter, the second data repository 202-2 may be parsed along with the user query and the preliminary response to obtain the relevant data using the data repository flow 410-2. The response refining flow 412-2 may then be implemented to refine the preliminary response for generating a subsequent preliminary response based on the relevant data obtained from the second data repository 202-2. The output of the response refining flow 412-2 may then move to block 414.

In one example, the data flow 408-2 may include a data repository flow 410-3 and a response refining flow 412-3. The data repository flow 410-3 may define a data flow for traversing and retrieving the relevant data from a third data repository, say, a third data repository 202-3. Thus, the data flow 408-2 may implement analysis of only one data repository 202-3. According to the data flow 408-2, initially, the third data repository 202-3 may be parsed along with the user query to obtain the relevant data using the data repository flow 410-3. Then, the response refining flow 412-3 may be implemented to generate a preliminary response based on the relevant data obtained from the third data repository 202-3. The output of the response refining flow 412-3 may then move to block 414.

In another example, the data flow 408-3 may include a data repository flow 410-4 corresponding to the second data repository, a data repository flow 410-5 corresponding to the third data repository, a response refining flow 412-4, a data repository flow 410-6 corresponding to the first data repository, and a response refining flow 412-5. The data repository flow 410-6, the data repository flow 410-4, and the data repository flow 410-5 may define data flows for traversing and retrieving relevant data from the first data repository 202-1, the second data repository 202-2, and the third data repository 202-3, respectively. Thus, the data flow 408-3 implements traversal of three data repositories 202-1, 202-2, and 202-3. Further, according to the data flow 408-1, the second and third data repositories 202-2 and 202-3 may be traversed simultaneously, in parallel, and thereafter the first data repository 202-1 may be traversed.

According to the data flow 408-3, initially the second data repository 202-2 may be parsed along with the user query to obtain the relevant data using the data repository flow 410-4, while the third data repository 202-3 may be parsed along with the user query to obtain the relevant data using the data repository flow 410-5. The response refining flow 412-4 may then be implemented to generate a preliminary response based on the relevant data obtained from the second data repository 202-2 and the third data repository 202-3. Thereafter, the first data repository 202-1 may be parsed along with the user query and the preliminary response to obtain the relevant data using the data repository flow 410-6. Subsequently, the response refining flow 412-5 may be implemented to refine the preliminary response for generating a subsequent preliminary response based on the relevant data obtained from the first data repository 202-1. The output of the response refining flow 412-5 may then move to block 414.

At block 414, it is determined whether any additional data repositories are to be searched prior to generating a final response 416 to the user query 402. If is determined that one or more additional data repositories are to be searched prior to generating the final response 416, the data flow diagram may move back to the orchestration gate 406. In an example, the orchestration gate 406 may receive another processing route from the query resolution model 216 for traversing the one or more additional data repositories. The orchestration gate 406 may then traverse the one or more additional data repositories according to the other processing route. In this way, additional data repositories may be parsed until at block 414, it is determined that any additional data repositories are not to be searched for generating the final response 416. Upon determining that any additional data repositories are not to be searched, the final response 416 may be generated.

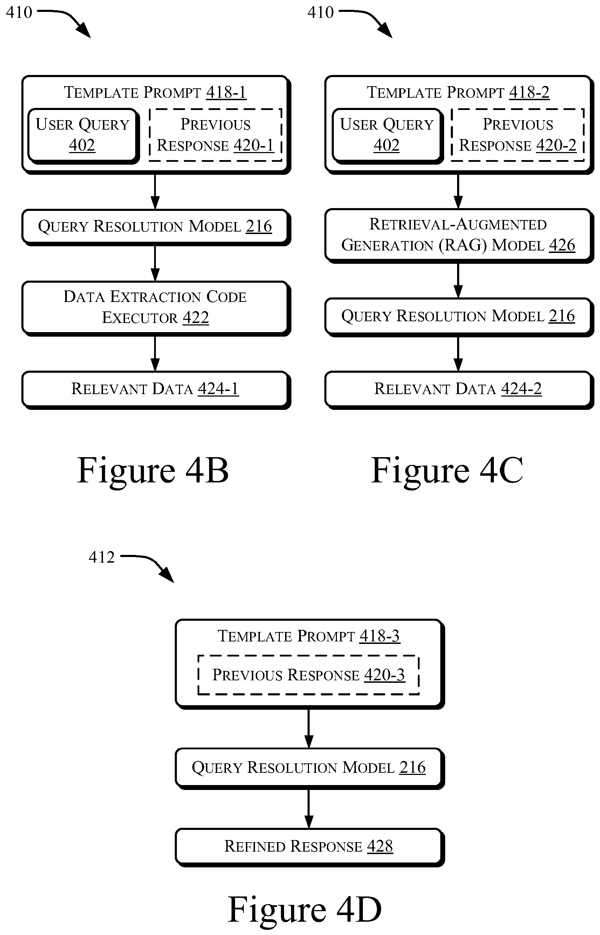

Figure 4B illustrates a first example repository flow 410 that can be implemented in any of the repository flows 410 of Figure 4A, according to an example. Further, Figure 4C illustrates a second example repository flow 410 that can be implemented in any of the repository flows 410 of Figure 4A, according to another example.

The first and second example repository flows 410 include a template prompt 418-1 and a second template prompt 418-2, respectively, for retrieving relevant data from a particular data repository. In an example, if the data repository, being traversed using the example repository flow 410, is a first data repository in a sequential order defined by the processing route, the template prompts 418-1 and 418-2 may be defined based on the user query. In another example, if the data repository, being traversed using the example repository flow 410, is not the first data repository in the sequential order, the template prompts 418-1 and 418-2 may be defined based on the user query and a previous response 420. The previous response may be a preliminary response generated by traversing a preceding data repository.

According to the first example repository flow 410, the template prompt 418-1 may be defined based on the user query 402 and conditionally on the previous response 420-1. The template prompt 418-1 may be parsed through the query resolution model 216 to generate a data extraction code for traversing a particular data repository. In an example, the data extraction code may be a code written in a programming language, such as python. The data extraction code may be transmitted to a data extraction code executor 422 that may execute the data extraction code to retrieve relevant data 424-1 from the particular data repository. In an example, the data extraction code may call application programming interfaces (APIs) to retrieve the relevant data 424-1 from the particular data repository. In an example, the data extraction code may be generated for traversing data repositories that requires calling of the APIs for data retrieval according to the data category associated with the data repositories. For example, for traversing a data repository storing the telemetry data and a data repository storing the asset and tag configuration data, the data extraction code may be utilized. Thus, depending on the data category associated with the data repository, a data retrieval technique including the generation and execution of the data extraction code may be utilized.

According to the second example repository flow 410, the template prompt 418-2 may be based on the user query 402 and conditionally on the previous response 420-2. The template prompt 418-2 may be utilized for invoking a retrieval-augmented generation (RAG) model 426 that may fetch particular data, required to respond to the user query 402, from a particular data repository. The particular data may then be transmitted to the query resolution model 216 that may generate the relevant data 424-2 by parsing the particular data for natural language refinement. In an example, the RAG model 426 may be invoked to fetch data from data repositories that have information from static data sources such as user guides or dynamic data sources such as logbooks that are continuously updated. Thus, depending on the data category associated with the data repository, a data retrieval technique including invoking of a RAG model 426 may be utilized.

Figure 4D illustrates an example response refining flow 412 that can be implemented in any of the response refining flows 412 of Figure 4A, according to an example. The example response refining flow 412 includes a template prompt 418-3 for generating a refined response 428 using a query resolution model 216. In an example, the template prompt 418-3 may be defined based on a previous response 420-3. The previous response may be a preliminary response generated by traversing a preceding data repository. According to the example response refining flow 412, the template prompt 418-3 may be parsed through the query resolution model 216 to generate the refined response 428. The refined response 428 may be utilized for generating the final response 416 to the user query 402 as explained with reference to Figure 4A.

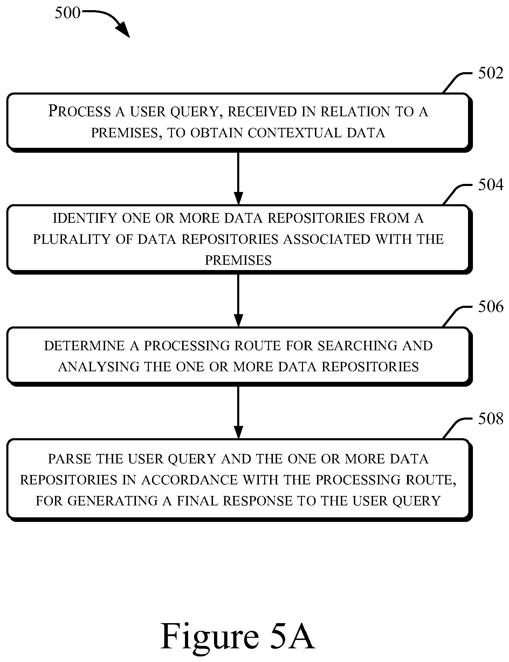

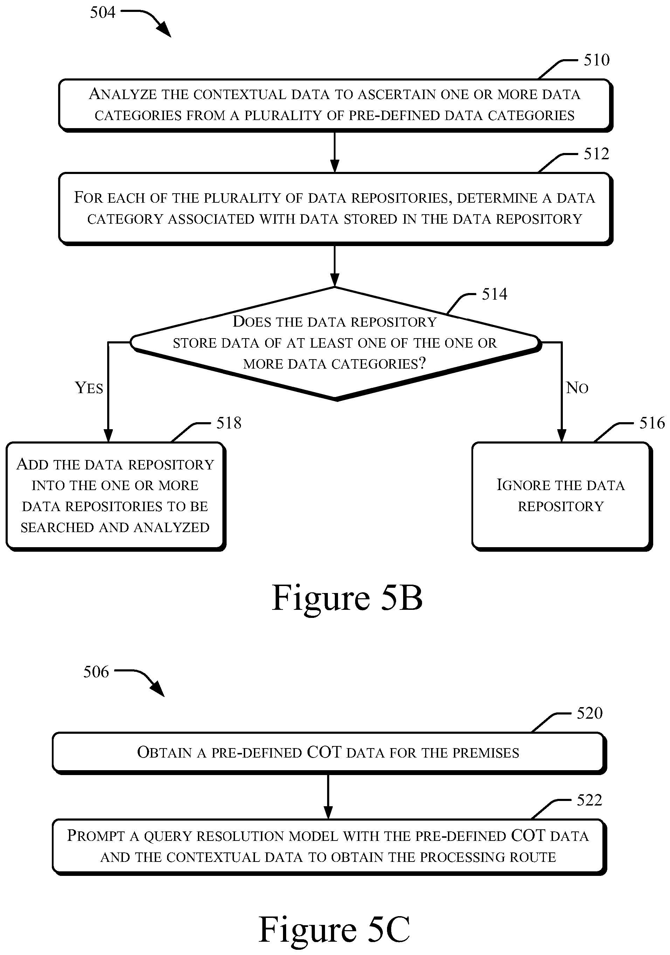

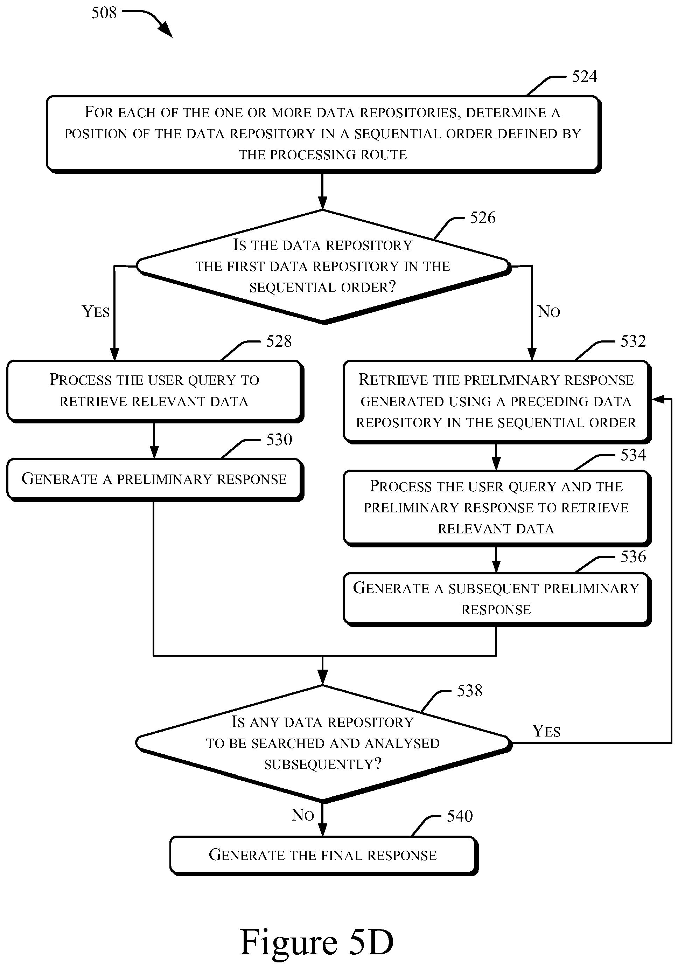

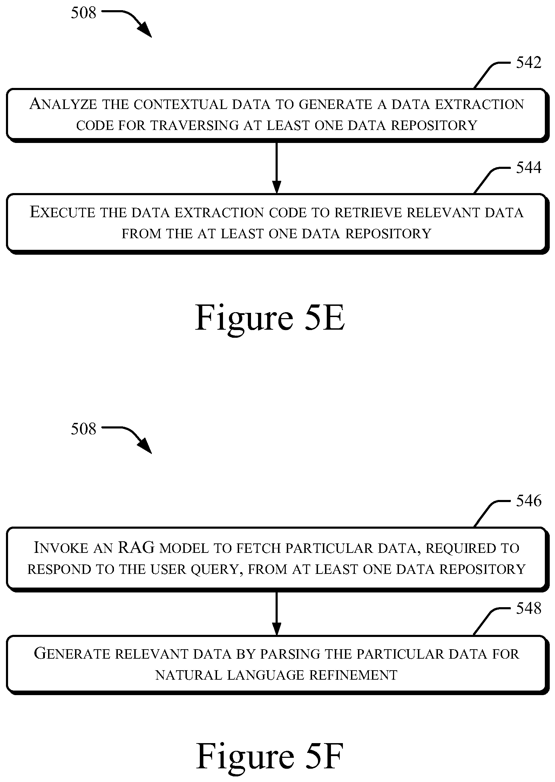

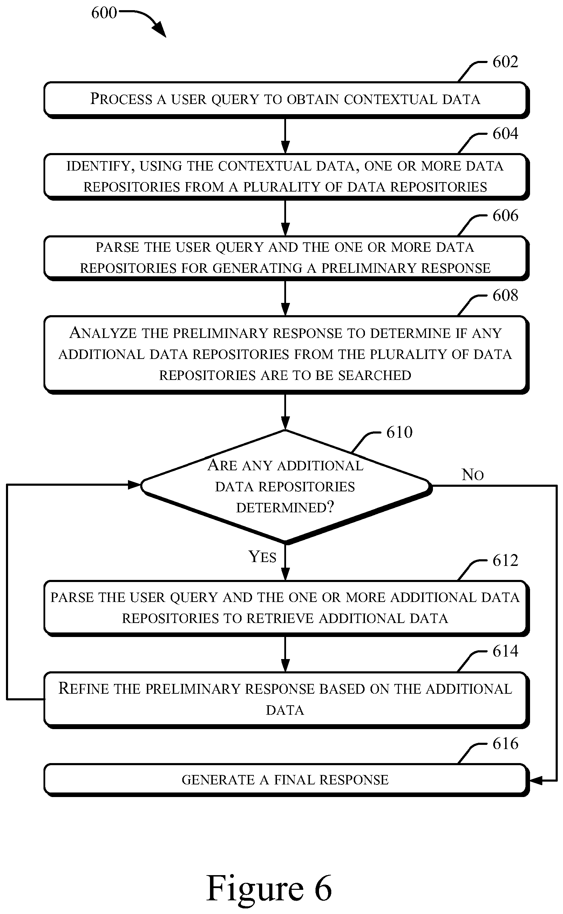

Figure 5A, Figure 5B, Figure 5C, Figure 5D, Figure 5E, Figure 5F, and Figure 6 illustrate example methods 500, 504, 506, 508, 508, 508, and 600, respectively, for resolving a user query. The order in which the methods are described is not intended to be construed as a limitation, and any number of the described method blocks may be combined in any order to implement the methods, or an alternative method. Further, the methods 500, 504, 506, 508, and 600 may be implemented by processing resource or computing device(s) through any suitable hardware, non-transitory machine-readable instructions, or combination thereof.

It may also be understood that methods 500, 504, 506, 508, and 600 may be performed by programmed computing devices, such as the system 100, as depicted in Figure 1, Figure 2A, and Figure 2B. Furthermore, the methods 500, 504, 506, 508, and 600 may be executed based on instructions stored in a non-transitory computer-readable medium, as will be readily understood. The non-transitory computer-readable medium may include, for example, digital memories, magnetic storage media, such as one or more magnetic disks and magnetic tapes, hard drives, or optically readable digital data storage media. While the methods 500, 504, 506, 508, and 600 are described below with reference to the system 100 as described above; other suitable systems for the execution of these methods may also be utilized. Additionally, implementation of the methods 500, 504, 506, 508, and 600 is not limited to such examples.

Figure 5A illustrates the method 500 for resolving a user query, according to an example.

At block 502, a user query, received in relation to a premises, may be processed to obtain contextual data. The contextual data may define a context of the user query, as previously explained in Figure 2A and Figure 2B. Examples of the premises may include, but are not limited to, a building, a production plant, an industrial establishment, an aircraft, an area belonging to the building, any covered or uncovered area including mechanical assets, and a perimeter of interest around the building or the covered or uncovered area. The building may be a commercial or a residential establishment, for example, a residential apartment, a hotel, an inn, a motel, a resort, an educational institute, a commercial complex, an industrial establishment, a data center, a storage facility, and a hospital. Further, a building may also refer to a combination of two or more structures or compounds. The mechanical assets may be assets operating to perform a desired function related to the premises. Examples of the mechanical assets for a power plant may include, but are not limited to, turbines, compressors, generators, controllers, and sensors.

At block 504, one or more data repositories may be identified from a plurality of data repositories, say the data repositories 202, associated with the premises. In an example, the one or more data repositories are to be searched to respond to the user query. In an example, the one or more data repositories may be identified using the contextual data and a query resolution model. In an example, the query resolution model may be a language model, such as a large language model (LLM), having capabilities to parse a natural language query and generate a response to the natural language query to establish a human-like conversation. In an example, the plurality of data repositories may store data related to assets, say mechanical assets, associated with the premises. In an example, the plurality of data repositories may store disparate data related to the assets. For example, one data repository may store time-series data obtained periodically or at different intervals in relation to the assets. Similarly, another data repository may store information available in user guides of each of the assets.

At block 506, a processing route may be determined using the contextual data and the query resolution model. The processing route may define a sequential order in which the one or more data repositories are to be searched and analysed to respond to the user query. For instance, for an example user query "what was affected due to fault in asset A?", a processing route may be determined according to which a data repository storing the asset and tag hierarchy data, may be parsed first to determine identifiers of assets, such as asset B, asset C, and asset D, connected in upstream and downstream of asset A. Thereafter, according to the processing route, a data repository storing the telemetry data may be parsed to determine if any threshold breach occurred for any of asset B, asset C, and asset D after the fault was initiated in asset A.

At block 508, the user query and the one or more data repositories may be parsed in accordance with the processing route to retrieve and process relevant data from each of the one or more data repositories for generating a final response to the user query. In an example, the user query and the one or more data repositories may be parsed by the query resolution model. The relevant data may have a context similar to the context of the user query. Thus, instead of resolving the user query in one go, the described method 500 breaks the user query into smaller solvable parts, where each part is solved by using a particular data repository. The described method 500 enables intelligent, context-aware query resolution by dynamically selecting and searching appropriate data repositories related to assets associated with the premises.

Figure 5B illustrates the method 504 for identifying the one or more data repositories at block 504 of Figure 5B, according to an example.

At block 510, the contextual data may be analyzed to ascertain one or more data categories, from a plurality of pre-defined data categories, relevant for responding to the user query. In an example, each of the plurality of data repositories may store data of a particular data category from the plurality of pre-defined data categories. Examples of the plurality of pre-defined data categories may include, but are not limited to, the telemetry data, the logbook data, the asset and tag configuration data, the asset and tag hierarchy data, the asset manuals data, and the standard maintenance data. In an example, for a user query "when did fault occur in asset A and what was affected due to the fault in asset A?", it may be ascertained that two specific data categories, i.e., the telemetry data and the asset and tag hierarchy data are relevant for responding to the user query. Although specifically two data categories are mentioned as relevant for the exemplary user query, it should be understood that any number of data categories may be ascertained as relevant based on the context of the user query.

At block 512, for each of the plurality of data repositories, a data category associated with data stored in the data repository may be determined.

At block 514, for each of the plurality of data repositories, it is determined whether the data repository stores data of at least one of the one or more data categories to identify the one or more data repositories.

If, at block 514, it is determined that the data repository does not store data of at least one of the one or more data categories, the method may move to block 516. At block 516, the data repository may be ignored and may not be searched or analyzed for responding to the user query.

If, at block 514, it is determined that the data repository stores data of at least one of the one or more data categories, the method may move to block 518. At block 518, the data repository may be added in the one or more data repositories that are to be searched and analyzed for responding to the user query. Thus, each of the one or more data repositories may store data of at least one of the one or more data categories. Accordingly, for the exemplary user query, the one or more data repositories may include a data repository storing the telemetry data and a data repository storing the asset and tag hierarchy data.

Figure 5C illustrates the method 506 for determining the processing route at block 506 of Figure 5A, according to an example. The method 506 of Figure 5C utilizes chain-of-thought (COT) prompting technique for determining the processing route.

At block 520, a pre-defined COT data may be obtained for the premises. The pre-defined COT data may be created by a user, such as a subject matter expert (SME), based on domain knowledge and rules associated with the premises. The pre-defined COT data may include at least one reference query associated with the premises and a corresponding COT for processing each of the at least one reference query. For each reference query, the corresponding COT may define basis for selection of data repositories from the plurality of data repositories for processing of the reference query. Further, the corresponding COT may define a basis for determining a reference order in which the data repositories are to be searched for generating a response for the reference query.

Subsequently, at block 522, the query resolution model may be prompted with the pre-defined COT data and the contextual data to obtain the processing route defining the sequential order for traversing the one or more data repositories. By prompting the query resolution model with the pre-defined COT data, the query resolution model is able to generate the processing route according to COT fed to the query resolution model utilizing the pre-defined COT data. In an example, for parsing the user query and the one or more data repositories in accordance with the processing route, the one or more data repositories may be traversed sequentially. In another example, the one or more data repositories may be traversed simultaneously in parallel. In yet another example, a part of the one or more data repositories may be traversed sequentially and another part of the one or more data repositories may be traversed simultaneously.

Figure 5D illustrates the method 508 for parsing the user query and the one or more data repositories at block 508 of Figure 5A, according to an example.

At block 524, for each of the one or more data repositories, a position of the data repository in the sequential order of the processing route may be determined.

At block 526, it is determined if the data repository is a first data repository in the sequential order of the one or more data repositories. In an example, the position of the data repository may be utilized for determining if the data repository is the first data repository. Upon determining, at block 526, that the data repository is the first data repository, the method 508 may move to block 528.

At block 528, the user query may be processed using the query resolution model to retrieve the relevant data from the first data repository.

At block 530, a preliminary response may be generated to the user query based on the relevant data. In an example, the preliminary response may be generated using the query resolution model.

Upon determining, at block 526, that the data repository is not the first data repository, the method 508 may move to block 532. At block 532, the preliminary response generated using a preceding data repository in the sequential order may be retrieved.

At block 534, the user query and the preliminary response may be processed using the query resolution model to retrieve the relevant data from the data repository.

At block 536, a subsequent preliminary response to the user query may be generated based on the relevant data and the preliminary response.

At block 538, it may be ascertained whether any data repository is to be searched and analyzed subsequently. Upon ascertaining that any data repository is not to be searched and analyzed subsequently, the preliminary response may be utilized for generating the final response at block 540.

Similarly, once the subsequent preliminary response is generated at block 536, at block 538, it may be ascertained whether any data repository is to be searched and analyzed subsequently. Upon ascertaining that any data repository is not to be searched and analyzed subsequently, the subsequent preliminary response may be utilized for generating the final response at block 540.

Upon ascertaining, at block 538, that a data repository is to be searched and analyzed subsequently, the method may move back to block 532 for refining, at blocks 532, 534, and 536, the preliminary response generated at block 530 or the subsequent preliminary response generated at block 536. The subsequent preliminary response may be continuously refined until it is ascertained, at block 538, that no data repository is to be searched and analyzed subsequently. In other words, after parsing each data repository, the response generated using the preceding data repository is continuously refined until all relevant data repositories are parsed to finally generate the final response for the user query.

Figure 5E illustrates the method 508 for parsing the user query and the one or more data repositories to retrieve the relevant data at block 508 of Figure 5A, according to an example.

At block 542, the contextual data may be analyzed to generate a data extraction code for at least one data repository of the one or more data repositories. In an example, the data extraction code may be for traversing the at least one data repository. In an example, the contextual data may be analyzed using the query resolution model to generate the data extraction code. In an example, the data extraction code may be a code written in a programming language, such as python.

At block 544, the data extraction code may be executed to retrieve the relevant data from the at least one data repository. In an example, the data extraction code may call application programming interfaces (APIs) to retrieve the relevant data from the at least one data repository. In an example, the data extraction code may be generated for traversing the at least one data repository that requires calling of the APIs for data retrieval according to the data category. For example, for traversing a data repository storing the telemetry data and a data repository storing the asset and tag configuration data, the data extraction code may be utilized. Thus, depending on the data category associated with the data repository, a data retrieval technique including the generation and execution of the data extraction code may be utilized.

Figure 5F illustrates the method 508 for parsing the user query and the one or more data repositories to retrieve the relevant data at block 508 of Figure 5A, according to another example.

At block 546, for at least one data repository of the one or more data repositories, a retrieval-augmented generation (RAG) model may be invoked to fetch particular data, required to respond to the user query, from at least one data repository.

At block 548, the relevant data may be generated by parsing the particular data using the query resolution model for natural language refinement. In an example, the RAG model may be invoked to fetch data from the at least one data repository that has information from static data sources such as user guides or dynamic data sources such as logbooks that are continuously updated. Thus, depending on the data category associated with the data repository, a data retrieval technique including invoking of a RAG model may be utilized.

Figure 6 illustrates the method 600 for resolving a user query, according to another example.

At block 602, a user query, received in relation to a premises, may be processed to obtain contextual data. The contextual data may define a context of the user query, as previously explained in description of Figure 2A and Figure 2B. Examples of the premises may include, but are not limited to, the building, the production plant, the industrial establishment, the aircraft, the area belonging to the building, any covered or uncovered area including the mechanical assets, and the perimeter of interest around the building or the covered or uncovered area, as previously explained in description of Figure 2A and Figure 2B.

At block 604, one or more data repositories may be identified from a plurality of data repositories, say the data repositories 202, associated with the premises. In an example, the one or more data repositories are to be searched to respond to the user query. In an example, the one or more data repositories may be identified using the contextual data and a query resolution model. In an example, the query resolution model may be a language model, such as a large language model (LLM), having capabilities to parse a natural language query and generate a response to the natural language query to establish a human-like conversation. In an example, the plurality of data repositories may store data related to assets, say mechanical assets, associated with the premises. In an example, the plurality of data repositories may store disparate data related to the assets. For example, one data repository may store time-series data obtained periodically or at different intervals in relation to the assets. Similarly, another data repository may store information available in user guides of each of the assets. In an example, COT prompting techniques may be utilized to prompt the query resolution model for identifying the one or more data repositories at block 604.

In an example, for identifying the one or more data repositories, the contextual data may be analyzed to ascertain one or more data categories, from a plurality of pre-defined data categories, relevant for responding to the user query. In an example, each of the plurality of data repositories may store data of a particular data category from the plurality of pre-defined data categories. Examples of the plurality of pre-defined data categories may include, but are not limited to, the telemetry data, the logbook data, the asset and tag configuration data, the asset and tag hierarchy data, the asset manuals data, and the standard maintenance data, as previously explained in description of Figure 2A and Figure 2B. Thus, for an example user query "when did fault occur in asset A and what was affected due to the fault in asset A?", it may be ascertained that two specific data categories, i.e., the telemetry data and the asset and tag hierarchy data are relevant for responding to the user query. Although specifically two data categories are mentioned as relevant for the exemplary user query, it should be understood that any number of data categories may be ascertained as relevant based on the context of the user query. Subsequently, for each of the plurality of data repositories, it may be determined whether the data repository stores data of at least one of the one or more data categories to identify the one or more data repositories. In an example, each of the one or more data repositories may store data of at least one of the one or more data categories. Thus, for the example user query, the one or more data repositories may include a data repository storing the telemetry data and a data repository storing the asset and tag hierarchy data.

At block 606, the user query and the one or more data repositories may be parsed to retrieve and process relevant data from each of the one or more data repositories for generating a preliminary response to the user query. The relevant data may have a context similar to the context of the user query. For instance, for the example user query, relevant data, i.e., a particular time associated with a fault alarm raised for asset A may be retrieved from the data repository storing the telemetry data. Further, relevant data, i.e., identifiers of assets connected in upstream and downstream of asset A may be retrieved from the data repository storing the asset and tag hierarchy data. Thus, by parsing the data repositories storing the telemetry data and the asset and tag hierarchy data, the particular time at while the fault occurred in asset A may be determined and it may be determined that which of the assets associated with the premises may be affected by the fault in asset A. In the afore-mentioned example of the query, the preliminary response may be "the fault occurred in asset A at the particular time. Further, asset B, asset C, and asset D may have been possibly affected by the fault in asset A". In an example, the user query and the one or more data repositories may be parsed by the query resolution model. In an example, the user query and the one or more data repositories may be parsed in accordance with a processing route. The processing route may define a sequential order in which the one or more data repositories are to be searched and analysed to respond to the user query. In an example, COT prompting technique may be utilized for determining the processing route, as described in conjunction with Figure 2A and Figure 2B.

At block 608, the preliminary response may be analyzed, once the user query and the one or more data repositories are parsed, to determine if any additional data repositories from the plurality of data repositories are to be searched for refining the preliminary response. In an example, the preliminary response may be analyzed using the contextual data and the query resolution model.

At block 610, a determination is made to ascertain whether any additional data repositories are determined for further searching.

At block 612, the user query and the one or more additional data repositories may be parsed to retrieve additional data having a context similar to the context of the user query. For instance, for the example user query, based on the contextual data, it may be determined that a data repository storing the asset and tag configuration data and the data repository storing the telemetry data should be searched for refining the preliminary response. In an example, similar to the one or more data repositories, the one or more additional data repositories may be parsed according to a processing route that may be determined using the COT prompting techniques on the query resolution model. For the example user query, the data repository storing the asset and tag configuration data may be parsed first with the user query to retrieve additional data, i.e., the high or low limits for the tags with respect to assets B, C, and D.

At block 614, the preliminary response may be refined based on the additional data retrieved from the data repository storing the asset and tag configuration data. Thereafter, since the data repository storing the telemetry data is also to be parsed for the example user query, the method may move from block 614 to 610 and then to block 612 where he data repository storing the telemetry data may be parsed with the user query to retrieve additional data, i.e., time-specific values of the tags associated with assets B, C, and D, after the fault was initiated in asset A. In an example, the user query and the one or more additional data repositories may be parsed by the query resolution model. At block 614, previously refined preliminary response may further be refined based on the additional data retrieved from the data repository storing the telemetry data. The additional data repositories may be parsed with the user queries and the preliminary response may be refined at blocks 612 and 614 for each additional data repository, until, at block 610, it is ascertained that any additional data repository is not to be searched.

Upon ascertaining, at block 610, that any additional data repository is not to be searched, the method may move to block 616. At block 616, a final response to the user query may be generated based on processing of the preliminary response and the additional data. For instance, for the example user query, the preliminary response and the additional data may be processed to determine if any limits were breached with respect to the tags associated with assets B, C, and D, after the fault was initiated in asset A. Considering that high or low limits were breached for assets B and D after the fault in asset A was initiated, a final response may be generated as "the fault occurred in asset A at the particular time. The high limit of tag P for asset B is X which was breached after the fault stated in asset A. The low limit of tag Q for asset D is Y which was breached after the fault stated in asset A. Thus, asset B and asset D were affected due to the fault in asset A". In an example, the preliminary response and the additional data may be processed by the query resolution model. The described method 600 enables intelligent, context-aware query resolution by dynamically selecting and searching appropriate data repositories related to assets associated with the premises.

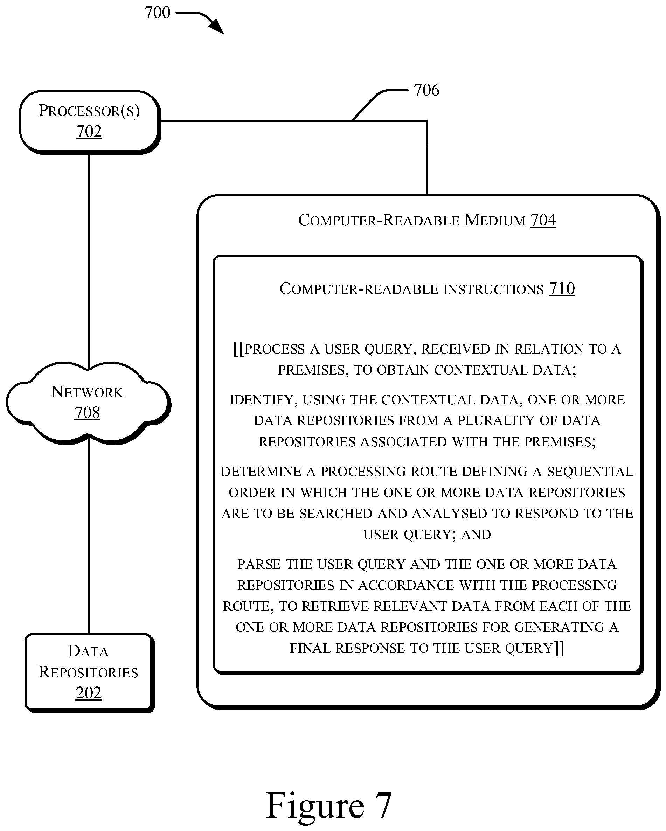

Figure 7 illustrates a computing environment 700 implementing a non-transitory computer-readable medium for resolving a user query, according to an example. In an example, the computing environment 700 includes processor(s) 702 communicatively coupled to a non-transitory computer-readable medium 704 through a communication link 706. In one example, the communication link 706 may be similar to the communication network 206, as described in conjunction with the preceding figures. In an example implementation, the computing environment 700 may be for example, the computing environment 200. In an example, the processor(s) 702 may have one or more processing resources for fetching and executing computer-readable instructions from the non-transitory computer-readable medium 704. The processor(s) 702 and the non-transitory computer-readable medium 704 may be implemented, for example, in the system 100 (as has been described in conjunction with the preceding figures).

The non-transitory computer-readable medium 704 may be, for example, an internal memory device or an external memory device. In an example implementation, the communication link 706 may be a network communication link. The processor(s) 702 and the non-transitory computer-readable medium 704 may also be communicatively coupled to the data repositories 202 over a network 708. The network 708 may be similar to the communication network 206 described in conjunction with Figure 2A and Figure 2B.

In an example implementation, the non-transitory computer-readable medium 704 may include a set of computer-readable instructions 710 which may be accessed by the processor(s) 702 through the communication link 706. Referring to Figure 7, in an example, the non-transitory computer-readable medium 704 may include instructions 710 that may cause the processor(s) 702 to process a user query, received in relation to a premises, to obtain contextual data. The contextual data may define a context of the user query, as previously explained in description of Figure 2A and Figure 2B. Examples of the premises may include, but are not limited to, the building, the production plant, the industrial establishment, the aircraft, the area belonging to the building, any covered or uncovered area including the mechanical assets, and the perimeter of interest around the building or the covered or uncovered area, as previously explained in description of Figure 2A and Figure 2B.

In an example, the instructions 710 may further cause the processor(s) 702 to identify one or more data repositories from a plurality of data repositories, say the data repositories 202, associated with the premises. In an example, the one or more data repositories are to be searched to respond to the user query. In an example, the one or more data repositories may be identified using the contextual data and a query resolution model. In an example, the query resolution model may be a language model, such as a large language model (LLM), having capabilities to parse a natural language query and generate a response to the natural language query to establish a human-like conversation. In an example, the plurality of data repositories may store data related to assets, say mechanical assets, associated with the premises. In an example, the plurality of data repositories may store disparate data related to the assets. For example, one data repository may store time-series data obtained periodically or at different intervals in relation to the assets. Similarly, another data repository may store information available in user guides of each of the assets. In an example, chain-of-thought (COT) prompting techniques may be utilized to prompt the query resolution model for identifying the one or more data repositories.

In one example, for identifying the one or more data repositories, the instructions 710 may cause the processor(s) 702 to analyze the contextual data to ascertain one or more data categories, from a plurality of pre-defined data categories, relevant for responding to the user query. In an example, each of the plurality of data repositories may store data of a particular data category from the plurality of pre-defined data categories. Examples of the plurality of pre-defined data categories may include, but are not limited to, the telemetry data, the logbook data, the asset and tag configuration data, the asset and tag hierarchy data, the asset manuals data, and the standard maintenance data, as previously explained in description of Figure 2A and Figure 2B. Thus, for an example user query "when did fault occur in asset A and what was affected due to the fault in asset A?", it may be ascertained that two specific data categories, i.e., the telemetry data and the asset and tag hierarchy data are relevant for responding to the user query. Although specifically two data categories are mentioned as relevant for the exemplary user query, it should be understood that any number of data categories may be ascertained as relevant based on the context of the user query.

Subsequently, for each of the plurality of data repositories, the instructions 710 may cause the processor(s) 702 to determine whether the data repository stores data of at least one of the one or more data categories to identify the one or more data repositories. In an example, each of the one or more data repositories may store data of at least one of the one or more data categories. Thus, for the example user query, the one or more data repositories may include a data repository storing the telemetry data and a data repository storing the asset and tag hierarchy data.

Once the one or more data repositories are identified, the instructions 710 may cause the processor(s) 702 to parse the user query and the one or more data repositories, to retrieve and process relevant data from each of the one or more data repositories for generating a preliminary response to the user query. The relevant data may have a context similar to the context of the user query. For instance, for the example user query, relevant data, i.e., a particular time associated with a fault alarm raised for asset A may be retrieved from the data repository storing the telemetry data. Further, relevant data, i.e., identifiers of assets connected in upstream and downstream of asset A may be retrieved from the data repository storing the asset and tag hierarchy data. Thus, by parsing the data repositories storing the telemetry data and the asset and tag hierarchy data, the particular time at while the fault occurred in asset A may be determined and it may be determined that which of the assets associated with the premises may be affected by the fault in asset A. In the afore-mentioned example of the query, the preliminary response may be "the fault occurred in asset A at the particular time. Further, asset B, asset C, and asset D may have been possibly affected by the fault in asset A". In an example, the instructions 710 may cause the processor(s) 702 to parse the user query and the one or more data repositories by the query resolution model. In an example, the instructions 710 may cause the processor(s) 702 to parse the user query and the one or more data repositories in accordance with a processing route. The processing route may define a sequential order in which the one or more data repositories are to be searched and analysed to respond to the user query.

In an example, the instructions 710 may cause the processor(s) 702 to determine the processing route using the contextual data and the query resolution model. In an example, the COT prompting techniques may be utilized for determining the processing route. In an example, for determining the processing route, the instructions 710 may cause the processor(s) 702 to obtain a pre-defined COT data for the premises. The pre-defined COT data may be created by a user, such as a subject matter expert (SME), based on domain knowledge and rules associated with the premises. The pre-defined COT data may include at least one reference query associated with the premises and a corresponding COT for processing each of the at least one reference query. For each reference query, the corresponding COT may define basis for selection of data repositories from the plurality of data repositories for processing of the reference query. Further, the corresponding COT may define a basis for determining a reference order in which the data repositories are to be searched for generating a response for the reference query.

Subsequently, the instructions 710 may cause the processor(s) 702 to prompt the query resolution model with the pre-defined COT data and the contextual data to obtain the processing route defining the sequential order for traversing the one or more data repositories. In an example, for parsing the user query and the one or more data repositories in accordance with the processing route, the instructions 710 may cause the processor(s) 702 to traverse the one or more data repositories sequentially. In another example, the instructions 710 may cause the processor(s) 702 to traverse the one or more data repositories simultaneously in parallel. In yet another example, the instructions 710 may cause the processor(s) 702 to traverse a part of the one or more data repositories sequentially and may traverse another part of the one or more data repositories simultaneously. For instance, for the example user query, the data repositories storing the telemetry data and the asset and tag hierarchy data may be traversed simultaneously in parallel as outputs of the data repositories storing the telemetry data and the asset and tag hierarchy data are independent of each other.

Once the user query and the one or more data repositories are parsed, the instructions 710 may cause the processor(s) 702 to analyze the preliminary response to determine if any additional data repositories from the plurality of data repositories are to be searched for refining the preliminary response. In an example, the preliminary response may be analyzed using the contextual data and the query resolution model. If it is determined that any additional data repositories are not to be searched, then a final response to the user query may be generated based on the preliminary response. In an example, determination regarding the one or more additional data repositories may be made using the COT prompting techniques implementable on the query resolution model.

Upon determining that one or more additional data repositories from the plurality of data repositories are to be searched, the instructions 710 may cause the processor(s) 702 to parse the user query and the one or more additional data repositories to retrieve additional data having a context similar to the context of the user query. For instance, for the example user query, based on the contextual data, it may be determined that a data repository storing the asset and tag configuration data and the data repository storing the telemetry data should be searched for refining the preliminary response. In an example, similar to the one or more data repositories, the one or more additional data repositories may be parsed according to a processing route that may be determined using the COT prompting techniques implementable on the query resolution model. For the example user query, the data repository storing the asset and tag configuration data may be parsed first with the user query to retrieve additional data, i.e., the high or low limits for the tags with respect to assets B, C, and D. The preliminary response may be refined based on the additional data retrieved from the data repository storing the asset and tag configuration data.

Thereafter, the data repository storing the telemetry data may be parsed with the user query to retrieve additional data, i.e., time-specific values of the tags associated with assets B, C, and D, after the fault was initiated in asset A. In an example, the user query and the one or more additional data repositories may be parsed by the query resolution model.

Subsequently, the instructions 710 may cause the processor(s) 702 to process the preliminary response and the additional data to generate a final response to the user query. For instance, for the example user query, the preliminary response and the additional data may be processed to determine if any limits were breached with respect to the tags associated with assets B, C, and D, after the fault was initiated in asset A. Considering that high or low limits were breached for assets B and D after the fault in asset A was initiated, a final response may be generated as "the fault occurred in asset A at the particular time. The high limit of tag P for asset B is X which was breached after the fault stated in asset A. The low limit of tag Q for asset D is Y which was breached after the fault stated in asset A. Thus, asset B and asset D were affected due to the fault in asset A". In an example, the preliminary response and the additional data may be processed by the query resolution model 216. The afore-mentioned example of the user query, the preliminary response, and the final response is not intended to be construed as a limitation, and various queries may be raised and various responses may be generated for the queries that, although not explicitly described herein, encompass the principles of the present subject matter.

In an example, for parsing the user query for each data repository of the one or more data repositories or the one or more additional data repositories, the instructions 710 may cause the processor(s) 702 to determine if the data repository is a first data repository in the sequential order of the one or more data repositories.

Upon determining that the data repository is the first data repository, the instructions 710 may cause the processor(s) 702 to process the user query using the query resolution model to retrieve the relevant data from the data repository. Further, the instructions 710 may cause the processor(s) 702 to generate the preliminary response to the user query using the query resolution model 216 based on the relevant data. The preliminary response may be utilized for generating the final response.

Upon determining that the data repository is not the first data repository, the instructions 710 may cause the processor(s) 702 to retrieve the preliminary response generated using a preceding data repository in the sequential order. The instructions 710 may cause the processor(s) 702 to process the user query and the preliminary response using the query resolution model to retrieve the relevant data from the data repository. Then, the instructions 710 may cause the processor(s) 702 to generate a subsequent preliminary response to the user query using the query resolution model based on the relevant data and the preliminary response. The subsequent preliminary response may be utilized for generating the final response. Thus, after parsing each data repository, the preliminary response generated using the preceding data repository is continuously refined until all relevant data repositories are parsed to finally generate the final response.

In an example, for parsing the user query and one of the one or more data repositories and the one or more additional data repositories, the instructions 710 may cause the processor(s) 702 to analyze the contextual data using the query resolution model to generate a data extraction code for traversing at least one data repository of the one or more data repositories or the one or more additional data repositories. In an example, the data extraction code may be a code written in a programming language, such as python. The instructions 710 may cause the processor(s) 702 to execute the data extraction code to retrieve the relevant data or the additional data from the at least one data repository. In an example, the data extraction code may call application programming interfaces (APIs) to retrieve the relevant data or the additional data from the at least one data repository. In an example, the data extraction code may be generated for traversing the at least one data repository that requires calling of the APIs for data retrieval according to the data category. For example, for traversing a data repository storing the telemetry data and a data repository storing the asset and tag configuration data, the data extraction code may be utilized. Thus, depending on the data category associated with the data repository, a data retrieval technique including the generation and execution of the data extraction code may be utilized.

In an example, for parsing the user query and one of the one or more data repositories and the one or more additional data repositories, the instructions 710 may cause the processor(s) 702 to invoke a retrieval-augmented generation (RAG) model to fetch particular data, required to respond to the user query, from at least one data repository of the one or more data repositories or the one or more additional repositories. The instructions 710 may cause the processor(s) 702 to generate the relevant data or the additional data by parsing the particular data using the query resolution model for natural language refinement. In an example, the RAG model may be invoked to fetch data from the at least one data repository that has information from static data sources such as user guides or dynamic data sources such as logbooks that are continuously updated. Thus, depending on the data category associated with the data repository, a data retrieval technique including invoking of a RAG model may be utilized.

In an example, the final response generated by the system 100 may be transmitted to the user device, say, the user device 204, for presenting the final response to the user query to the user. The user may utilize the user device to provide feedback related to the final response. The feedback may be directed to accuracy of the final response. In addition, or alternatively, the feedback may be directed to completeness of the final response. The feedback may be utilized to fine-tune the query resolution model.

Thus, the described approaches guide and steer a query resolution model, such as a large language model (LLM), to provide an accurate response to the user queries related to a specific domain. The described approach enables intelligent, context-aware query resolution by dynamically selecting and searching appropriate data repositories related to assets associated with the premises.

Although examples for the present disclosure have been described in language specific to structural features and/or methods, it is to be understood that the appended claims are not necessarily limited to the specific features or methods described. Rather, the specific features and methods are disclosed and explained as examples of the present disclosure.

## Claims

1. A method comprising:
processing a user query, received in relation to a premises, to obtain contextual data defining a context of the user query;
identifying, using the contextual data and a query resolution model, one or more data repositories from a plurality of data repositories associated with the premises, wherein the plurality of data repositories stores data related to assets associated with the premises, wherein the one or more data repositories are to be searched to respond to the user query;
determining, using the contextual data and the query resolution model, a processing route defining a sequential order in which the one or more data repositories are to be searched and analysed to respond to the user query; and
parsing, by the query resolution model, the user query and the one or more data repositories in accordance with the processing route, to retrieve and process relevant data from each of the one or more data repositories for generating a final response to the user query, the relevant data having a context similar to the context of the user query.

2. The method of claim 1, wherein each of the plurality of data repositories stores data of a particular data category from a plurality of pre-defined data categories, wherein identifying the one or more data repositories comprises:
analyzing the contextual data to ascertain one or more data categories, from the plurality of pre-defined data categories, relevant for responding to the user query; and
for each of the plurality of data repositories, determining whether the data repository stores data of at least one of the one or more data categories to identify the one or more data repositories, wherein each of the one or more data repositories stores data of at least one of the one or more data categories.

3. The method of claim 1, wherein the determining the processing route comprises:
obtaining a pre-defined chain-of-thought (COT) data for the premises, the pre-defined COT data including at least one reference query associated with the premises and a corresponding COT for processing each of the at least one reference query, wherein, for each reference query, the corresponding COT defines:
basis for selection of data repositories from the plurality of data repositories for processing of the reference query; and
basis for determining a reference order in which the data repositories are to be searched for generating a response for the reference query; and
prompting the query resolution model with the pre-defined COT data and the contextual data to obtain the processing route defining the sequential order for traversing the one or more data repositories.

4. The method of claim 1, wherein, for each data repository of the one or more data repositories, parsing the user query comprises:
determining if the data repository is a first data repository in the sequential order of the one or more data repositories; and
upon determining that the data repository is the first data repository:
processing the user query using the query resolution model to retrieve the relevant data from the data repository; and
generating, using the query resolution model, a preliminary response to the user query based on the relevant data, wherein the preliminary response is utilized for generating the final response.

5. The method of claim 4, wherein, for each data repository of the one or more data repositories, parsing the user query comprises:
upon determining that the data repository is not the first data repository:
retrieving the preliminary response generated using a preceding data repository in the sequential order;
processing the user query and the preliminary response using the query resolution model to retrieve the relevant data from the data repository; and
generating, using the query resolution model, a subsequent preliminary response to the user query based on the relevant data and the preliminary response, wherein the subsequent preliminary response is utilized for generating the final response.

6. The method of claim 1, wherein parsing the user query and the one or more data repositories comprises:
for at least one data repository of the one or more data repositories, analyzing the contextual data using the query resolution model to generate a data extraction code for traversing the at least one data repository; and
executing the data extraction code to retrieve the relevant data from the at least one data repository.

7. The method of claim 1, wherein parsing the user query and the one or more data repositories comprises:
for at least one data repository of the one or more data repositories, invoking a retrieval-augmented generation (RAG) model to fetch particular data, required to respond to the user query, from the at least one data repository; and
generating the relevant data by parsing the particular data using the query resolution model for natural language refinement.

8. The method of claim 1, wherein parsing the user query and the one or more data repositories according to the sequential order defined by the processing route comprises one of:
traversing the one or more data repositories sequentially;
traversing the one or more data repositories simultaneously in parallel; and
traversing a part of the one or more data repositories sequentially and another part of the one or more data repositories simultaneously.

9. A system comprising:
a context determination engine to:
process a user query, received in relation to a premises, to obtain contextual data defining a context of the user query; and
a query resolution engine to:
identify, using the contextual data and a query resolution model, one or more data repositories from a plurality of data repositories associated with the premises, wherein the plurality of data repositories stores data related to assets associated with the premises;
parse, by the query resolution model, the user query and the one or more data repositories, to retrieve and process relevant data from each of the one or more data repositories for generating a preliminary response to the user query, the relevant data having a context similar to the context of the user query;
analyze, using the contextual data and the query resolution model, the preliminary response to determine if any additional data repositories from the plurality of data repositories are to be searched for refining the preliminary response;
upon determining that one or more additional data repositories from the plurality of data repositories are to be searched, parse, by the query resolution model, the user query and the one or more additional data repositories to retrieve additional data having a context similar to the context of the user query; and
process, by the query resolution model, the preliminary response and the additional data to generate a final response to the user query.

10. The system of claim 9, wherein each of the plurality of data repositories stores data of a particular data category from a plurality of pre-defined data categories, wherein to identify the one or more data repositories or the one or more additional data repositories, the query resolution engine is to:
analyze the contextual data to ascertain one or more data categories, from the plurality of pre-defined data categories, relevant for responding to the user query; and
for each of the plurality of data repositories, determine whether the data repository stores data of at least one of the one or more data categories to identify the one or more data repositories, wherein each of the one or more data repositories and the one or more additional data repositories stores data of at least one of the one or more data categories.

11. The system of claim 9, wherein to identify the one or more data repositories or the one or more additional data repositories, the query resolution engine is to:
obtain a pre-defined chain-of-thought (COT) data for the premises, the pre-defined COT data including at least one reference query associated with the premises and a corresponding COT for processing each of the at least one reference query, wherein, for each reference query, the corresponding COT defines:
basis for selection of data repositories from the plurality of data repositories for processing of the reference query; and
basis for determining a reference order in which the data repositories are to be searched for generating a response for the reference query; and
prompt the query resolution model with the pre-defined COT data and the contextual data to obtain a processing route defining a sequential order for traversing the one or more data repositories and the one or more additional data repositories.

12. The system of claim 9, wherein to parse the user query and one of the one or more data repositories and the one or more additional data repositories, the query resolution engine is to:
for at least one data repository of the one or more data repositories or the one or more additional data repositories, analyze the contextual data using the query resolution model to generate a data extraction code for traversing the at least one data repository; and
execute the data extraction code to retrieve the relevant data or the additional data from the at least one data repository.

13. The system of claim 9, wherein to parse the user query and one of the one or more data repositories and the one or more additional data repositories, the query resolution engine is to:
for at least one data repository of the one or more data repositories or the one or more additional repositories, invoke a retrieval-augmented generation (RAG) model to fetch particular data, required to respond to the user query, from the at least one data repository; and
generate the relevant data or the additional data by parsing the particular data using the query resolution model for natural language refinement.

14. A non-transitory computer-readable medium comprising instructions for resolving a user query, the instructions being executable by a processing resource to:
process a user query, received in relation to a premises, to obtain contextual data defining a context of the user query;
identify, using the contextual data and a query resolution model, one or more data repositories from a plurality of data repositories associated with the premises, wherein the plurality of data repositories stores data related to assets associated with the premises, wherein the one or more data repositories are to be searched to respond to the user query;
determine, using the contextual data and the query resolution model, a processing route defining a sequential order in which the one or more data repositories are to be searched and analysed to respond to the user query; and
parse, by the query resolution model, the user query and the one or more data repositories in accordance with the processing route, to retrieve relevant data from each of the one or more data repositories for generating a final response to the user query, the relevant data having a context similar to the context of the user query.

15. The non-transitory computer-readable medium of claim 14, wherein to parse the user query and the one or more data repositories according to the sequential order defined by the processing route, the instructions are executable by the processing resource to one of:
traverse the one or more data repositories sequentially
traverse the one or more data repositories simultaneously in parallel; and
traverse a part of the one or more data repositories sequentially and another part of the one or more data repositories simultaneously.
